# EUROPÄISCHE PATENTSCHRIFT

(11) **EP 1 983 857 B1**
(45) Veröffentlichungstag und Bekanntmachung des Hinweises auf die Patenterteilung: **29.07.2009**
(21) Anmeldenummer: 07703179.7
(22) Anmeldetag: 01.02.2007
(51) Int. Cl.: A44B 11/25, B60R 22/30

(54) **GURTZUNGE FÜR EINEN SICHERHEITSGURT**
BELT LATCH FOR A SAFETY BELT
LANGUETTE POUR CEINTURE DE SECURITE

(30) Priorität: 09.02.2006 DE 102006005886
(43) Veröffentlichungstag der Anmeldung: 29.10.2008
(73) Patentinhaber: Autoliv Development AB, 447 83 Vargarda (SE)
(72) Erfinder: FYHR, Fredrik, S-422 42 Hisings-Backa (SE)
(74) Vertreter: Schön, Thilo
(86) Internationale Anmeldenummer: PCT/EP2007/000843
(87) Internationale Veröffentlichungsnummer: WO 2007/090551

(56) Entgegenhaltungen:
- US-A- 4 876 770
- US-A- 5 870 816

## Beschreibung

### Technisches Gebiet der Erfindung

Die Erfindung betrifft eine Gurtzunge für einen Sicherheitsgurt nach dem Oberbegriff des Anspruchs 1.

In einem Dreipunkt-Sicherheitsgurtsystem erstreckt sich das Gurtband von einem oberen zu einem unteren Punkt. Am Sicherheitsgurt ist eine Gurtzunge angeordnet, die mit einem Gurtschloss verbunden werden kann und dann das Gurtband in einen Becken- und einen Oberkörperabschnitt unterteilt. Hierzu weist die Gurtzunge einen Zungengrundkörper mit einer Öse auf, durch welche das Gurtband verläuft.

Es hat sich herausgestellt, dass es im Falle eines Unfalls günstig sein kann, den Beckenabschnitt des Gurtbandes vom Brustabschnitt zu entkoppeln, d.h., das Gurtband im Zungengrundkörper zu blockieren.

### Stand der Technik

Die gattungsbildende DE 198 22 473 C2 schlägt hierzu eine Gurtzunge vor, in deren Zungengrundkörper ein Umlenk- und Klemmelement um eine Achse drehbar angeordnet ist. Im belastungsfreien Zustand befindet sich dieses Umlenk- und Klemmelement in einer ersten Position, in der das Gurtband über eine Umlenkkante des Umlenk- und Klemmelementes verläuft. Überschreitet die Gurtkraft einen vorbestimmten Wert, schwenkt das Umlenk- und Klemmelement um seine Achse und klemmt das Gurtband mit einer Klemmkante gegen einen Klemmbakken des Zungengrundkörpers. Das Umlenk- und Klemmelement weist eine die Drehachse beinhaltende Welle auf, die im Zungengrundkörper gelagert ist.

Bei Rückhaltesystemen in einem Kraftfahrzeug ist es grundsätzlich sehr wichtig, dass sie bei einem Unfall schnell reagieren. Ferner ist es wünschenswert, die Gurtzunge möglichst leicht auszubilden, damit die erforderlichen Retraktorkräfte für den Gurtbandeinzug nicht erhöht werden müssen.

### Gegenstand der Erfindung

Die vorliegende Aufgabe stellt sich deshalb die Aufgabe, die gattungsgemäße Gurtzunge dahingehend zu verbessern, dass sie ein verbessertes Reaktionsverhalten zeigt.

Diese Aufgabe wird durch eine Gurtzunge mit den Merkmalen des Anspruchs 1 gelöst.

Erfindungsgemäß ist das Umlenk- und Klemmelement nicht mittels einer Welle, sondern mittels seiner Außenfläche am Zungengrundkörper gelagert. Hierzu weist der Zungengrundkörper eine entsprechende Gleitfläche auf. Eine derartige Lagerung des Umlenk- und Klemmelementes hat folgende Vorteile:
Da die Drehachse außerhalb des Umlenk- und Klemmelementes liegen kann, muss dieses keine Welle aufweisen, mittels der das Umlenk- und Klemmelement am Zungengrundkörper gelagert ist. Hierdurch kann das Umlenk- und Klemmelement mit relativ geringer Masse und relativ geringem Trägheitsmoment ausgebildet werden. Weiterhin ist es leicht möglich, einen nur sehr kleinen Bewegungsweg des Umlenk- und Klemmelementes vorzusehen, was die Reaktionszeit des Systems weiter verbessert. Schließlich kann sich das Umlenk- und Klemmelement über eine große Fläche am Zungengrundkörper abstützen, so dass das Umlenk- und Klemmelement nur eine geringe Eigenstabilität benötigt, was sich zusätzlich positiv auf seine Masse auswirkt.
Vorzugsweise sind Zungengrundkörper und Umlenk- und Klemmelement mittels einer Sollbruch-Arretierung miteinander verbunden, welche das Umlenk- und Klemmelement in seinem normalen Betriebszustand arretiert.
Weitere bevorzugte Ausführungsformen der Erfindung ergeben sich aus den weiteren Unteransprüchen sowie aus dem nun mit Bezug auf die Figuren näher erläuterten Ausführungsbeispiel. Hierbei zeigen:

### Kurzbeschreibung der Zeichnungen

- Figur 1: Eine dreidimensionale Darstellung einer Gurtzunge,
- Figur 2a: die Gurtzunge aus Figur 1 ohne Kunststoffumhüllung und mit aufgeschnittenen Stirnseiten mit eingelegtem Gurtband im nicht blockierten Zustand,
- Figur 2b: einen Schnitt durch die Figur 2a entlang der Schnittlinie A-A,
- Figur 3a: das in Figur 2a Gezeigte im blockierten Zustand und
- Figur 3b: einen Schnitt entlang der Ebene A-A aus Figur 3a.

### Beschreibung bevorzugter Ausführungsformen

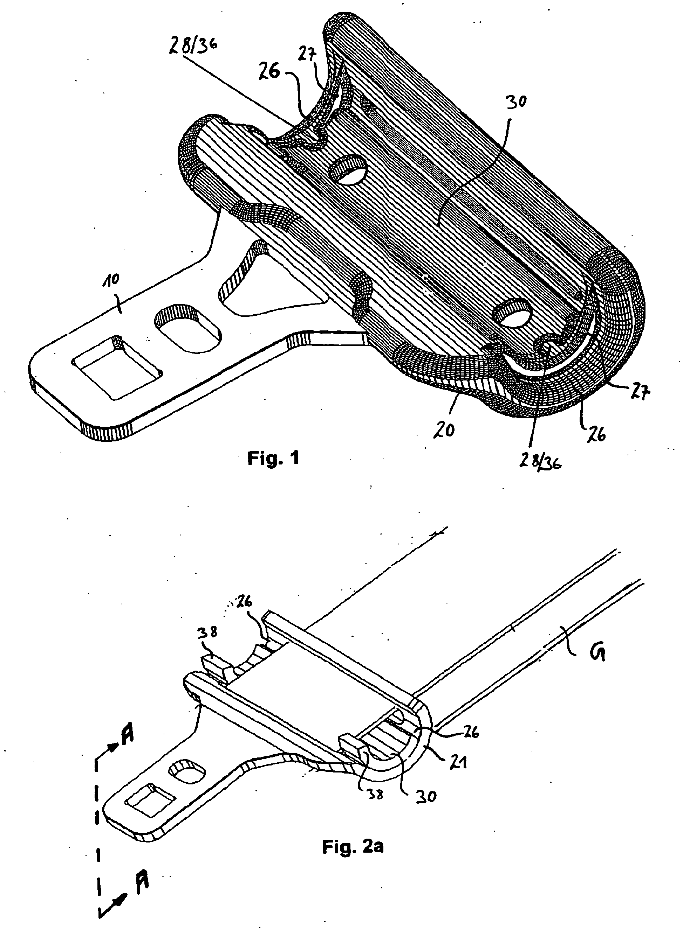

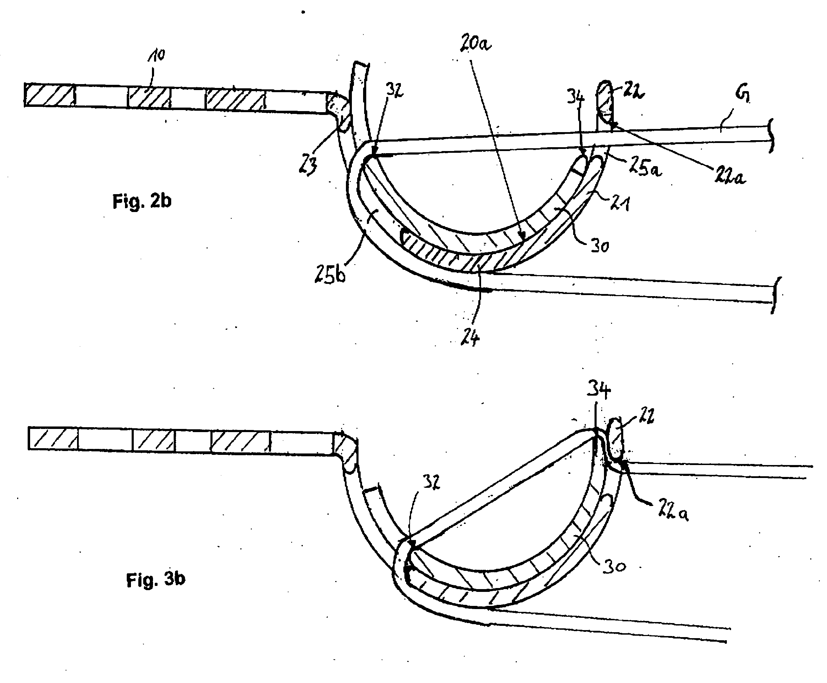

Die Figuren 1, 2a und 2b zeigen eine Gurtzunge im unbelasteten Zustand. Die Gurtzunge weist eine Verbindungsplatte 10 auf, die zum Einstecken in ein Gurtschloss vorgesehen ist. Mit der Verbindungsplatte 10 starr verbunden ist der Zungengrundkörper 20, welcher aus einem Metallkern 21 (siehe hierzu beispielsweise Figur 2a) und einer diesen Metallkern teilweise umgebenden Kunststoffumspritzung besteht. Der Metallkern 21 des Zungengrundkörpers 20 und die Verbindungsplatte 10 sind als einstückiges Metallteil ausgebildet. Der Zungengrundkörper 20 hat im wesentlichen die Form eines längs aufgeschnittenen Hohlzylinders, d.h., die Form einer Rinne. Hierdurch weist er eine innere Oberfläche 20a mit einem kreisabschnittförmigen Querschnitt auf. Diese innere Oberfläche 20a ist von zwei Ösen 25a,25b durchbrochen (s. hierzu insbesondere Figur 2b).

Der Zungengrundkörper 20 weist zwei Seitenarme 26 auf, welche, wie man beispielsweise mit Blick auf Figuren 2a und 2b sieht, durch den oberen Steg 22, den unteren Steg 23 und den Stützsteg 24 miteinander verbunden sind. Zwischen oberem Steg 22 und Stützsteg 24 befindet sich die obere Öse 25a, zwischen dem Stützsteg 24 und dem unteren Steg 23 befindet sich die untere Öse 25b. Durch diese beiden Ösen ist das Gurtband G geführt.

Auf der inneren Oberfläche 20a des Zungengrundkörpers 20, welche als Gleitfläche dient, ist das Umlenk- und Klemmelement 30 angeordnet. Es ist ebenfalls rinnenförmig ausgebildet und der Radius seiner konvexen Außenfläche entspricht dem Radius der inneren Oberfläche 20a des Zungengrundkörpers 20. Dies ist insbesondere gut in den Figuren 2a und 2b zu sehen. Axial ist das Umlenk- und Klemmelement 30 durch die auf den Seitenarmen 26 angeordneten Führungsstege 27 gesichert. Von diesen Führungsstegen 27 erstreckt sich jeweils eine Abbrechnase 28 nach innen und ragt in eine hierzu passende Ausnehmung 36 im Umlenk- und Klemmelement.

Im in Figur 1 und den Figuren 2a und 2b gezeigten unbelasteten Zustand erstreckt sich das Gurtband G durch die obere Öse 25a und wird durch die Umlenkkante 32 des Umlenk- und Klemmelementes 30 umgelenkt. Das Gurtband G ist hierbei wie in einer gewöhnlichen Gurtzunge frei beweglich. Seitlich wird das Gurtband G hierbei durch die Führungsschenkel 28 des Umlenk- und Klemmelements 30 geführt.

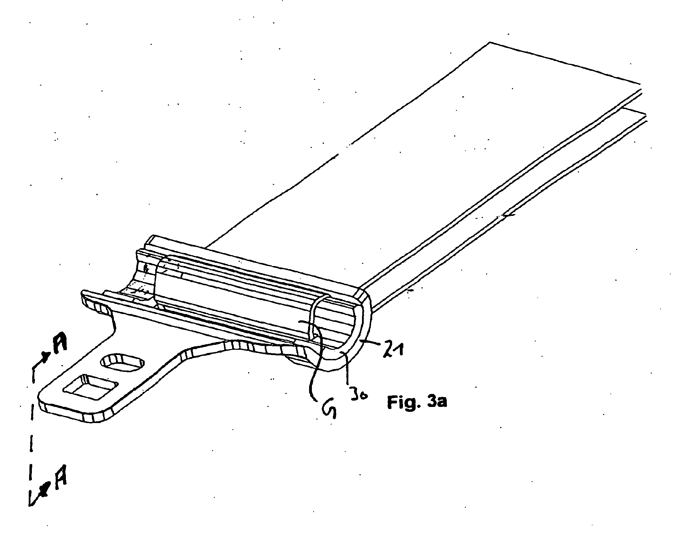

Bei Überschreiten einer definierten Grenzkraft, welche das Gurtband G auf die Umlenkkante 32 ausübt (diese liegt in der Regel in einer Größenordnung zwischen 10 und 20 kN), brechen die Abbrechnasen 28 und das Gurtband G drückt das Umlenk- und Klemmelement 30 in die in den Figuren 3a und 3b gezeigte Position, wobei es über die innere Oberfläche 20a des Zungengrundkörpers, insbesondere des Stützsteges, gleitet. In dieser Position klemmt der Gurt flächig zwischen dem Umlenk- und Klemmelement 30 und dem oberen Steg 22, wobei die Klemmkante 34 des Umlenk- und Klemmelementes 30 und die als Klemmbacken 22a ausgebildete Kante des oberen Stegs 22 die Endpunkte der Klemmung bilden. Je größer die Kraft im Gurtband ist, desto größer ist hierbei auch die Klemmkraft, so dass das Ziel der Entkopplung zwischen Becken- und Oberkörperabschnitt des Gurtbandes G erreicht ist.

Man sieht, dass konstruktionsbedingt das Umlenk- und Klemmelement 30 sehr leicht ausgebildet sein kann und nur ein geringer Bewegungsweg erforderlich ist, wodurch die gewünschten kurzen Reaktionszeiten erreicht werden. Ein weiterer Vorteil ist die einfache Herstellbarkeit der Gurtzunge, insbesondere ist es möglich, das Umlenk- und Klemmelement 30 in den Metallkern 21 einzulegen und diese Anordnung dann zu umspritzen, wobei auch die Abbrech-Nasen erzeugt werden. Alternativ hierzu kann auch zunächst der Metallkern umspritzt und dann das Umlenk- und Klemmelement eingelegt werden. Die Abbrech-Nasen werden dann durch kurzes Erwärmen der entsprechenden Bereiche der Führungsstege erzeugt, wobei eine gewisse Materialmenge aufgeschmolzen wird und in die jeweilige Ausnehmung läuft. Bei Verfahren können insbesondere mit einem hohem Automatisierungsgrad durchgeführt werden.

### Bezugszeichenliste

- 10: Verbindungsplatte
- 20: Zungengrundkörper
- 21: Metallkern
- 22: oberer Steg
- 22a: Klemmbacken
- 23: unterer Steg
- 24: Stützsteg
- 25a: obere Öse
- 25b: untere Öse
- 26: Seitenarm
- 27: Führungssteg
- 28: Abbrech-Nase
- 30: Umlenk- und Klemmelement
- 32: Umlenkkante
- 34: Klemmkante
- 36: Ausnehmung
- 38: Führungsschenkel
- G: Gurt

## Patentansprüche

1. Gurtzunge für einen Sicherheitsgurt, mit einer Verbindungsplatte (10) zur Verbindung der Gurtzunge mit einem Gurtschloss, einem starr mit der Verbindungsplatte (10) verbundenen Zungengrundkörper (20) und einem Umlenk- und Klemmelement (30) mit einer Umlenkkante (32), welches derart am Zungengrundkörper (20) angeordnet ist, dass es bei Überschreiten einer definierten Gurtkraft eine Drehbewegung um eine Drehachse gegenüber dem Zungengrundkörper (20) ausführt, wobei das Umlenk- und Klemmelement eine konvexe Außenfläche aufweist,
**dadurch gekennzeichnet, dass** das Umlenk- und Klemmelement (30) mittels der Außenfläche am Zungengrundkörper (20) gelagert ist.

2. Gurtzunge nach Anspruch 1, **dadurch gekennzeichnet, dass** das Umlenk-und Klemmelement rinnenförmig ausgebildet ist, so dass die Drehachse außerhalb des Umlenk- und Klemmelementes liegt.

3. Gurtzunge nach einem der vorangehenden Ansprüche, **dadurch gekennzeichnet, dass** der Zungengrundkörper zwei Seitenarme (26) aufweist.

4. Gurtzunge nach Anspruch 3, **dadurch gekennzeichnet, dass** jeder Seitenarm einen Führungssteg (27) aufweist, welcher das Umlenk- und Klemmelement axial positionieren.

5. Gurtzunge nach einem der Ansprüche 3 bis 4, **dadurch gekennzeichnet, dass** sich zwischen den Seitenarmen ein Stützsteg (24) erstreckt, an dem die Außenfläche des Umlenk- und Klemmelements zumindest im rotierten Zustand abschnittsweise anliegt.

6. Gurtzunge nach einem der vorangehenden Ansprüche, **dadurch gekennzeichnet, dass** sie wenigstens eine Sollbruch-Arretierung aufweist, welche das Umlenk- und Klemmelement im unbelasteten Zustand am Zungengrundkörper arretiert.

7. Gurtzunge nach Anspruch 3 oder 4 und Anspruch 6, **dadurch gekennzeichnet, dass** die Sollbruch-Arretierung dem Bereich der Seitenarme zugeordnet ist.

8. Gurtzunge nach Anspruch 7, **dadurch gekennzeichnet, dass** die Sollbruch-Arretierung an den Seitenarmen angeordnete Abbrech-Nasen (28) umfasst, die in axialer Richtung in Ausnehmungen (36) des Umlenk- und Klemmelements eingreifen.

## Claims

1. Belt latch for a safety belt comprising a connection plate (10) for connecting the belt latch to a buckle, a latch main body (20) being rigidly connected to the connecting plate (10), and a bending and clamping element (30) with a bending edge (32), said bending and clamping element being arranged on the latch main body (20) in a way that it rotates around a rotation axis in relation to the latch main body, if the force in the belt exceeds a defined force, whereby said bending and clamping elements comprises a convex outer surface,
**characterised in that** the bending and clamping element (30) is mounted to the latch main body (20) via its outer surface.

2. Belt latch according to claim 1, **characterised in that** the bending and clamping element has the shape of a half pipe so that the rotation axis lies outside the bending and clamping element.

3. Belt latch according to one of the preceding claims, **characterised in that** the latch main body comprises two side arms (26).

4. Belt latch according to claim 3, **characterised in that** each side arm shows a guiding stud (27) positioning the bending and clamping element.

5. Belt latch according to one of the claims 3 or 4, **characterised in that** a reinforcing stud (24) extends between the side arms, whereby the bending and clamping element is in contact to the reinforcing stud at least in the rotated state.

6. Belt latch according to one of the preceding claims, **characterised in that** at least one breaking fixation is provided which arrests the bending and clamping element at the latch main body in the force-free state.

7. Belt latch according to claim 3 or 4 and claim 6, **characterised in that** the breaking fixation is allocated to the area of the side arms.

8. Belt latch according to claim 7, **characterised in that** the breaking fixation comprises breaking noses (28) at the side arms engaging axially into recesses (36) of the bending and clamping element.

## Revendications

1. Languette pour une ceinture de sécurité, avec une plaque de fixation (10) pour la fixation de la languette à une boucle de ceinture, un corps de base de languette (20) raccordé de manière rigide à la plaque de fixation (10) et un élément de renvoi et de serrage (30) avec un bord de renvoi (32), lequel est disposé contre le corps de base de languette (20) de manière à exécuter un mouvement de rotation autour d'un axe de rotation relati-vement au corps de base de languette (20) en cas de dépassement d'un effort de ceinture défini, l'élément de renvoi et de serrage présentant une surface extérieure convexe,
**caractérisée en ce que** l'élément de renvoi et de serrage (30) est monté par la surface extérieure contre le corps de base de languette (20).

2. Languette selon la revendication 1, **caractérisée en ce que** l'élément de renvoi et de serrage est prévu en forme de gouttière, de telle manière que l'axe de rotation est situé à l'extérieur de l'élément de renvoi et de serrage.

3. Languette selon l'une des revendications précédentes, **caractérisée en ce que** le corps de base de languette comporte deux bras latéraux (26).

4. Languette selon la revendication 3, **caractérisée en ce que** chaque bras latéral comporte une nervure de guidage (27) positionnant axialement l'élément de renvoi et dé serrage.

5. Languette selon l'une des revendications 3 à 4, **caractérisée en ce qu'**une traverse d'appui (24) s'étend entre les bras latéraux, contre laquelle repose, par passages au moins en état de rotation, la surface extérieure de l'élément de renvoi et de serrage.

6. Languette selon l'une des revendications précédentes, **caractérisée en ce qu'**elle comporte au moins un blocage à rupture de consigne, lequel fixe l'élément de renvoi et de serrage contre le corps de base de languette en état d'absence de contrainte.

7. Languette selon la revendication 3 ou la revendication 4 et la revendication 6, **caractérisée en ce que** le blocage à rupture de consigne est attribué à la zone des bras latéraux.

8. Languette selon la revendication 7, **caractérisée en ce que** le blocage à rupture de consigne comprend des becs de rupture (28) disposés contre les bras latéraux, lesquels s'engagent en direction axiale dans des évidements (36) de l'élément de renvoi et de serrage.
